# EUROPEAN PATENT SPECIFICATION

(11) **EP 4 362 703 B1**
(45) Date of publication and mention of the grant of the patent: **16.10.2024**
(21) Application number: 22735909.8
(22) Date of filing: 29.06.2022
(51) Int. Cl.: A23L 23/10

(54) **PARTICULATE BOUILLON COMPOSITION**
TEILCHENFÖRMIGE BOUILLONZUSAMMENSETZUNG
COMPOSITION PARTICULAIRE DE BOUILLON

(30) Priority: 01.07.2021 EP 21183051
(43) Date of publication of application: 08.05.2024
(73) Proprietor: Unilever IP Holdings B.V., 3013 AL Rotterdam (NL)
(72) Inventor: FARRO, Farrah, Gislaine, 6708 WH Wageningen (NL); KEICHER, Gloria, Christin, 6708 WH Wageningen (NL); RAJU, Gunabalan, 6708 WH Wageningen (NL); SPRINGER, Adrian, Benedikt, 6708 WH Wageningen (NL)
(74) Representative: van den Brom, Coenraad Richard
(86) International application number: PCT/EP2022/067956
(87) International publication number: WO 2023/275172

(56) References cited:
- CN-A- 106 820 039
- GB-A- 845 937
- US-A1- 2018 228 198

## Description

### TECHNICAL FIELD OF THE INVENTION

The present invention relates to a particulate bouillon composition that does not contain added salt and that can be mixed with hot water to prepare a bouillon. The invention also relates to a method of preparing such a particulate bouillon composition.

### BACKGROUND OF THE INVENTION

Bouillon powder is a well-known product that is commonly used for making food products like bouillons, soups and gravies. Salt and monosodium glutamate are conventionally applied in these bouillon powders to impart a savoury taste.

However, from a nutritional perspective it is desirable to reduce the amount of salt in bouillon powders. Furthermore, many consumers have concerns about the use of monosodium glutamate as a food additive.

US 202000337346 describes a process for the production of a bouillon powder comprising the steps of:
- forming a mixture comprising 40 to 78 wt % (dry weight percent of the mixture) of a lipid composition having a solid fat content (SFC) at 20.degree. C. below 12 wt %, and 22 to 60 wt % (dry weight percent of the mixture) of a fiber having a rate of hydration between 15 to 500 cP/min, and water, wherein the water is present at a weight ratio of fiber to water between 1:2.5 and 1:30;
- drying the mixture to obtain a lipid-fiber powder; and
- mixing 30 to 80 wt % crystalline ingredients (by weight of the bouillon powder), 2 to 35 wt % amorphous ingredients (by weight of the bouillon powder), 0.5 to 20 wt % flavourings (by weight of the bouillon powder), and 4 to 30 wt % of the lipid-fiber powder (by weight of the bouillon powder) in order to obtain the bouillon powder.

US 2019/0191749 describes a salty taste enhancing composition, comprising glucan and mannan, wherein the composition ratio (weight ratio) of glucan:mannan is 1:1.5 to 1:25.

US 2010/00239740 describes a low sodium salt substitute composition comprising: 3-25% by weight of sodium acid sulfate; 2-8% by weight of one or more umami ingredients; 0-50% by weight of potassium chloride; and 0-95% by weight of a filler.

US 2009/0035444 describes a composition comprising (a) a seasoning mixture comprising a flavoring agent and (b) a salt substitute, wherein said salt substitute comprises potassium chloride, taurine or a physiologically acceptable salt thereof, and a 5'-nucleotide monophosphate, comprising 5'-adenosinic acid (AMP) or 5'-inosinic acid (IMP) or a physiologically acceptable salt thereof.

GB 845,937 describes a process for manufacturing a dry pre-cooked soup mix. Example I describes a creamed potato soup mix having a low salt content.

### SUMMARY OF THE INVENTION

The objective of the current invention is to provide a particulate composition that can be used for making good tasting bouillons, soups and gravies and that is free from added kitchen salt.

The inventors have discovered that bouillon powders that are capable of providing a desirable salty taste contribution, despite the fact that they do not contain added salt, can be prepared by incorporating a special blend of edible plant materials. Accordingly, the present invention provides particulate bouillon composition comprising:
(a) 2-16 wt.% of *Allium* selected from onion, shallot, garlic, leek and combinations thereof;
(b) 1.5-25 wt.% of vegetables selected from carrot, tomato, red bell pepper, parsnip and combinations thereof;
(c) 1-10 wt.% of herbs selected from parsley, fenugreek, rosemary, bay leaves and combinations thereof;
(d) 0-15 wt.% of herbal roots selected from celeriac, lovage root, root parsley and combinations thereof;
(e) 0.4-4.2 wt.% of spices selected turmeric, pepper, nutmeg, clove, celery seed and combinations thereof.

Besides this blend of edible plant materials, the bouillon powder composition of the present inventions contains thickener, filler and flavouring.

The invention also provides a process of preparing a particulate bouillon composition, said process comprising combining the above mentioned edible plant materials with thickener, filler and flavouring.

The invention also relates to the use of the aforementioned particulate bouillon composition in the preparation of food, said use comprising mixing the particulate bouillon composition with water.

### DETAILED DESCRIPTION OF THE INVENTION

A fist aspect of the invention relates to a particulate bouillon composition comprising:
(a) 2-16 wt.% of *Allium* selected from onion, shallot, garlic, leek and combinations thereof;
(b) 1.5-25 wt.% of vegetables selected from carrot, tomato, red bell pepper, parsnip and combinations thereof;
(c) 1-10 wt.% of herbs selected from parsley, fenugreek, rosemary, bay leaves and combinations thereof;
(d) 0-15 wt.% of herbal roots selected from celeriac, lovage root, root parsley and combinations thereof;
(e) 0.4-4.2 wt.% of spices selected turmeric, pepper, nutmeg, clove, celery seed and combinations thereof;
(f) 15-50 wt.% of thickener;
(g) 12-55 wt.% of filler;
(h) 0.1-10wt.% of flavouring;

wherein the composition contains less than 0.5 wt.% sodium;
wherein components (a) to (e) constitute 10-50 wt.% of the composition;
wherein components (f) to (g) constitute 35-75 wt.% of the composition;
wherein components (a) to (h) constitute 70-100 wt.% of the composition.

All percentages herein are provided as weight percent, unless indicated otherwise.

The edible plant materials (a) to (e) of the particulate bouillon composition are obtained from plants or plant parts and may have undergone size reduction (including e.g. pureeing) and/or drying. Also fractions of plant materials obtained by pressing (pulp or juice) may be applied as edible plant materials, optionally after drying.

The particulate bouillon composition of the present invention preferably contains 3-14 wt.%, more preferably 6-13 wt.% of *Allium* selected from onion, shallot, garlic, leek and combinations thereof.

According to a particularly preferred embodiment, the particulate bouillon composition contains 3-14 wt.%, more preferably 6 -13 wt.% of *Allium* selected from onion, shallot and combinations thereof.

Garlic is preferably contained in the particulate bouillon composition in a concentration of 0.4-4 wt.%, more preferably of 0.6-2 wt.%.

Vegetables selected from carrot, tomato, red bell pepper, parsnip and combinations thereof are preferably constitute 2-22 wt.%, more preferably 3.5-19 wt.% of the particulate bouillon composition.

According to a particularly preferred embodiment, the particulate bouillon composition contains 1.5-8 wt.% of tomato, more preferably 2.0-5.8 wt.% of tomato.

Herbs selected from parsley, fenugreek, rosemary, bay leaves and combinations thereof are preferably present in the particulate bouillon composition in an amount of 1.2-6.3 wt.%, more preferably of 1.5-5.3 wt.%.

Preferably, the particulate bouillon composition contains two or more of the aforementioned herbs. More preferably, the composition contains at least three herbs selected from parsley, fenugreek, rosemary and bay leaves.

The particulate bouillon composition preferably contains 0.1-12 wt.%, more preferably 0.1-9.5 wt.% of herbal roots selected from celeriac, lovage root, root parsley and combinations thereof;

Preferably, the particulate bouillon composition contains 0.1-1.0 wt.% of lovage root, more preferably 0.1-0.5 wt.% lovage root.

Root parsley is preferably contained in the particulate bouillon composition in a concentration of 0.5-5 wt.%, more preferably in a concentration of 0.8-3 wt.%.

The particulate bouillon composition preferably contains 0.8-4 wt.%, more preferably 1.5-2.4 wt.% of spices selected turmeric, pepper, nutmeg, clove, celery seed and combinations thereof;

Celery seed is preferably contained in the particulate bouillon composition in a concentration of 0.2-1.5 wt.%, more preferably of 0.4-1.0 wt.%.

According to a preferred embodiment, the particulate bouillon composition contains 1-10 wt.% oil, more preferably 0.5-6.3 wt.% of oil and most preferably 1.2-4.8 wt.% oil. The term oil as used herein encompasses both oils that are liquid at room temperature and oils that are solid or semi-solid at room temperature.

The thickener that is employed in the particulate bouillon composition is preferably selected from native starch, pregelatinised starch, pectin, agar, galactomannans (e,g, fenugreek gum, guar gum, locust bean gum or tara gum), xanthan gum, cellulose gums (including carboxymethyl cellulose, hydroxypropyl cellulose, hydroxypropyl methylcellulose, microcrystalline cellulose, and methylcellulose), gum Arabic, gellan gum, alginates, alginic acid, arabinoxylans, curdlan gum, cassia gum, konjac gum, carrageenans, gelatins and combinations thereof. More preferably, the thickener is selected from native starch, fenugreek gum, guar gum, locust bean gum, and tara gum, gum Arabic, gellan gum, curdlan gum, cassia gum, konjac gum and combinations thereof.

According to a particularly preferred embodiment, the thickener comprises native starch. Native starch is preferably contained in the particulate bouillon composition in a concentration of 5-52 wt.%, more preferably in a concentration of 10-45 wt.%.

The filler that contained in the particulate bouillon composition is preferably selected from maltodextrin, dry glucose syrup, sucrose, inulin and combinations thereof. More preferably, the filler is selected from maltodextrin, dry glucose syrup and combinations thereof. The maltodextrin employed preferably has a DE (dextrose equivalent) in the range of 3 to 20, more preferably of 8-20. The dry glucose syrup employed preferably has a DE of 21 to 30

In another preferred embodiment, the particulate bouillon composition contains 0.1-5 wt.%, more preferably 0.15-3.0 wt.% of expanded starch particles. The inventors have found that the inclusion of expanded starch particles improves the flowability of the particulate bouillon composition, especially after storage.

According to one particularly preferred embodiment, the particulate bouillon composition is a vegetable bouillon, comprising:
(a) 4-15 wt.% of onion;
(b) 5-20 wt.% of vegetables selected from carrot, tomato and combinations thereof;
(c) 3-15 wt.% of herbal roots selected from celeriac, lovage root, root parsley and combinations thereof;
   (i) 1-10 wt.% of vegetable oil;
wherein the combination of these components (a), (b) and (d) constitutes 15-40 wt.%, preferably 20-35 wt.% of the composition.

According to another particularly preferred embodiment, the particulate bouillon composition is a chicken bouillon, comprising:
(h) 0.3-10 wt.% of chicken flavouring;
(i) 1-10 wt.% of chicken fat;
(j) 2-10 wt.% of chicken powder.

According to yet another particularly preferred embodiment, the particulate bouillon composition is a beef bouillon, comprising:
(h) 0.3-10 wt.% of beef flavouring;
(i) 1-10 wt.% of beef fat;
(j) 1-8 wt.% of beef powder.

The particulate bouillon composition of the present invention preferably does not contain particles of sodium chloride.

The particulate composition preferably also does not contain particles of potassium chloride.

The particulate bouillon composition offers the advantage that it provides a pleasant savoury taste without the need of adding monosodium glutamate. Accordingly, the particulate bouillon composition contains 0-0.5 wt.% glutamate, more preferably 0-0.1 wt.% glutamate.

Also addition of yeast extract as a taste enhancer is not required. Consequently, in a preferred embodiment the particulate bouillon composition contains 0-0.3 wt.% yeast extract, more preferably the composition contains no yeast extract.

The particulate bouillon composition of the present invention also does not require addition of sugar (sucrose). Preferably, the composition contains less than 0.5 wt.% of sugar particles, more preferably the composition contains no sugar particles.

According to a further preferred embodiment, the particulate bouillon composition does not contain added colouring.

The water content of the particulate bouillon composition preferably does not exceed 10 wt.%, more preferably is in the range of 0 to 3 wt.%.

The flavouring that is applied in the particulate bouillon composition preferably contains a thermal process flavour.

Another aspect of the present invention relates to a process of preparing a particulate bouillon composition, said process comprising combining the following components in the indicated amounts:
(a) 2-16 parts by weight of Allium selected from onion, shallot, garlic, leek and
   combinations thereof;
(b) 1.5-25 parts by weight of vegetables selected from carrot, tomato, red bell pepper, parsnip and combinations thereof;
(c) 1-10 parts by weight of herbs selected from parsley, fenugreek, rosemary, bay leaves and combinations thereof;
(d) 0-15 parts by weight of herbal roots selected from celeriac, lovage root, root parsley and combinations thereof;
(e) 0.4-4.2 parts by weight of spices selected turmeric, pepper, nutmeg, clove, celery seed and combinations thereof;
(f) 15-50 parts by weight of thickener;
(g) 12-55 parts by weight of filler;
(h) 0.1-10 parts by weight of flavouring;

wherein the process does not comprise the addition of sodium chloride;
wherein components (a) to (e) constitute 15-50 wt.% of the final composition;
wherein components (f) to (g) constitute 35-75 wt.% of the final composition;
wherein components (a) to (h) constitute 70-100 wt.% of the final composition.

The components (a) to (h) that are employed in the present process preferably are the same components (a) to (h) as presented above in relation to the particulate bouillon composition of the present invention.

In the present process *Allium* selected from onion, shallot, garlic, leek and combinations thereof is preferably applied in an amount of 3-14 parts by weight, more preferably 6-13 parts by weight.

According to a particularly preferred embodiment, the present method employs 3-14 parts by weight, more preferably 6-13 parts by weight of *Allium* selected from onion, shallot and combinations thereof.

Garlic is preferably employed in the present process in an amount of 0.4-4 parts by weight, more preferably of 0.6-2 parts by weight.

Vegetables selected from carrot, tomato, red bell pepper, parsnip and combinations thereof are preferably employed in the process in an amount of 2-22 parts by weight, more preferably 3.5-19 parts by weight.

According to a particularly preferred embodiment, tomato is employed in the process in an amount of 1.5-8 parts by weight, more preferably 2.0-5.8 parts by weight.

Herbs selected from parsley, fenugreek, rosemary, bay leaves and combinations thereof are preferably are applied in the process in an amount of 1.2-6.3 parts by weight, more preferably of 1.5-5.3 parts by weight.

Preferably, the process employs two or more of the aforementioned herbs. More preferably, the process employs at least three herbs selected from parsley, fenugreek, rosemary and bay leaves.

The present process preferably employs 0.1-12 parts by weight, more preferably 0.1-9.5 parts by weight of herbal roots selected from celeriac, lovage root, root parsley and combinations thereof;

Preferably, the process employs lovage root in an amount of 0.1-1.0 parts by weight, more preferably of 0.1-0.5 parts by weight.

The present process preferably employs root parsley in an amount of 0.5-5 parts by weight, more preferably of 0.8-3 parts by weight.

Spices selected turmeric, pepper, nutmeg, clove, celery seed and combinations thereof are preferably employed in an amount of 0.8-4 parts by weight, more preferably 1.5-2.4 parts by weight.

Celery seed is preferably employed in the process in an amount of 0.2-1.5 parts by weight, more preferably of 0.4-1.0 parts by weight.

According to a preferred embodiment, the process comprises the addition of oil in an amount of 1-10 parts by weight, more preferably of 0.5-6.3 parts by weight and most preferably 1.2-4.8 parts by weight.

Native starch is preferably employed as a thickener in the present process in an amount of 5-52 parts by weight, more preferably in an amount of 10-45 parts by weight.

Expanded starch particles are preferably added in the present process in an amount of 0.1-5 parts by weight, more preferably of 0.15-3.0 parts by weight.

According to a preferred embodiment, the process of the present invention yields a particulate bouillon composition as presented herein before.

The process of the present invention preferably does not comprise the addition of a source of monosodium glutamate, said source containing at least 10 wt.% of monosodium glutamate.

The present process preferably does not comprise addition of yeast extract.

The process preferably does not comprise addition of sugar (sucrose).

Yet another aspect of the invention relates to the use of a particulate bouillon composition in the preparation of food, said use comprising mixing a particulate bouillon composition according to the present invention with water.

The invention is further illustrated by means of the following non-limiting examples.

### EXAMPLES

### Example 1

A vegetable bouillon powder was prepared on the basis of the recipe that is shown in Table 1.

**Table 1**

| | **Wt.%** |
|---|---|
| *Allium* | |
| • Onion white powder | 2.86 |
| • Onion white granules1-4mm | 2.86 |
| • Onion powder toasted | 4.29 |
| • Garlic powder | 0.86 |

| Vegetables | |
|---|---|
| • Tomato powder (cold break) | 3.57 |
| • Carrot granules 1-4 mm | 8.57 |
| • Carrot juice powder | 3.14 |
| • Bell pepper red granules 1-3 mm | 0.86 |

| Herbs | |
|---|---|
| • Parsley leaves broken 2-4mm | 2.86 |
| • Bay leaves powder | 0.29 |
| • Rosemary powder | 0.14 |

| Herbal roots | |
|---|---|
| • Celeriac powder | 4.29 |
| • Root parsley powder | 2.86 |
| • Lovage root powder | 0.20 |

| Spices | |
|---|---|
| • Turmeric - ground (3% curcumine) | 0.71 |
| • Pepper white peeled - ground | 0.29 |
| • Celery seed - ground | 0.57 |
| • Nutmeg - ground | 0.14 |
| • Clove - ground | 0.09 |
| Flavouring | 2,76 |
| Native potato starch (thickener) | 32.85 |
| Maltodextrin DE17-20 (filler) | 21.95 |
| Expanded starch particles | 1.29 |
| Maize oil | 1.7 |

This bouillon powder was used to prepare a bouillon by adding two teaspoons of the powder to 250 mL of boiling water. The bouillon so obtained had an umami vegetable taste and smell and contained visible vegetable and herb pieces.

### Example 2

Another vegetable bouillon powder was prepared on the basis of the recipe that is shown in Table 2.

**Table 2**

| | **Wt.%** |
|---|---|
| *Allium* | |
| • Onion white powder | 2.90 |
| • Onion white granules1-4mm | 2.90 |
| • Onion powder toasted | 4.27 |
| • Garlic powder | 0.81 |

| Vegetables | |
|---|---|
| • Tomato powder (cold break) | 3.55 |
| • Carrot granules 1-4mm | 8.55 |
| • Carrot Juice Powder | 3.15 |
| • Bell pepper red granules 1-3 mm | 0.81 |

| Herbs | |
|---|---|
| • Parsley leaves broken 2-4mm | 2.90 |
| • Bay leaves powder | 0.24 |
| • Rosemary powder | 0.16 |

| Herbal roots | |
|---|---|
| • Celeriac powder | 4.27 |
| • Root parsley powder | 2.82 |
| • Lovage root powder | 0.16 |

| Spices | |
|---|---|
| • Turmeric - ground (3% curcumine) | 0.73 |
| • Pepper white peeled - ground | 0.24 |
| • Celery seed - ground | 0.56 |
| • Nutmeg - ground | 0.16 |
| • Clove - ground | 0.08 |
| Flavour | 2.74 |
| Potato starch native moisture 8% bag | 33.06 |
| Maltodextrin DE17-20 Corn Based | 21.94 |
| Potato Starch Native Physically Modified | 1.29 |
| F&O Sunflower HO oil winterized (CH) | 1.69 |

This bouillon powder was used to prepare a bouillon by adding two teaspoons of the powder to 250 mL of boiling water. The bouillon so obtained had an umami vegetable taste and smell and contained visible vegetable and herb pieces

### Example 3

A chicken bouillon powder was prepared on the basis of the recipe that is shown in Table 3.

**Table 3**

| *Allium* | **Wt.%** |
|---|---|
| • Onion white powder | 3.75 |
| • Onion powder toasted | 2.5 |
| • Garlic powder | 0.75 |

| Vegetables | |
|---|---|
| • Tomato powder (cold break) | 1.87 |
| • Carrot granules 1-2mm | 1.25 |

| Herbs | |
|---|---|
| • Parsley leaves broken 2-4mm | 1.25 |
| • Bay leaves powder | 0.26 |
| • Rosemary powder | 0.16 |

| Herbal roots | |
|---|---|
| • Lovage root powder | 0.13 |

| Spices | |
|---|---|
| • Turmeric - ground (3% curcumine) | 0.62 |
| • Pepper white peeled - ground | 0.31 |
| • Celery seed - ground | 0.5 |
| • Nutmeg - ground | 0.13 |
| • Clove - ground | 0.06 |
| Flavouring | 6,49 |
| Chicken powder ¹ | 4.75 |
| Chicken fat | 2.25 |
| Native potato starch (thickener) | 26.25 |
| Maltodextrin DE17-20 (filler) | 46.35 |
| Expanded starch particles | 0.38 |

| | |
|---|---|
| ¹ produced by cooking and mincing chicken meat, followed by drying, milling and sieving d contained visible vegetable and herb pieces | |

This bouillon powder was used to prepare a bouillon by adding two teaspoons of the powder to 250 mL of boiling water. The bouillon so obtained had the smell of cooked chicken and an umami chicken taste.

### Example 4

Another chicken bouillon powder was prepared on the basis of the recipe that is shown in Table 4.

**Table 4**

| *Allium* | **Wt.%** |
|---|---|
| • Onion white powder | 3.77 |
| • Onion powder toasted | 2.46 |
| • Garlic powder | 0.70 |

| Vegetables | |
|---|---|
| • Tomato powder (cold break) | 1.84 |
| • Carrot granules 1-2mm | 1.23 |

| Herbs | |
|---|---|
| • Parsley leaves broken 2-4mm | 1.23 |
| • Bay leaves powder | 0.26 |
| • Rosemary powder | 0.18 |

| Herbal roots | |
|---|---|
| • Lovage root powder | 0.09 |

| Spices | |
|---|---|
| • Turmeric - ground (3% curcumine) | 0.61 |
| • Pepper white peeled - ground | 0.35 |
| • Celery seed - ground | 0.44 |
| • Nutmeg - ground | 0.12 |
| • Clove - ground | 0.05 |
| Flavouring | 6.49 |
| Chicken powder ¹ | 4.74 |
| Chicken fat | 2.28 |
| Native potato starch (thickener) | 26.32 |
| Maltodextrin DE17-20 (filler) | 46.49 |
| Expanded starch particles | 0.35 |

| | |
|---|---|
| ¹ produced by cooking and mincing chicken meat, followed by drying, milling and sieving | |

This bouillon powder was used to prepare a bouillon by adding two teaspoons of the powder to 250 mL of boiling water. The bouillon so obtained had the smell of cooked chicken and an umami chicken taste.

### Example 5

A beef bouillon powder was prepared on the basis of the recipe that is shown in Table 5.

**Table 5**

| *Allium* | **Wt.%** |
|---|---|
| • Onion white powder | 5.00 |
| • Onion powder toasted | 5.00 |
| • Garlic powder | 0.83 |

| Vegetables | |
|---|---|
| • Tomato powder (cold break) | 2.50 |
| • Carrot granules 1-2mm | 1.67 |
| • Bell pepper red granules 1-3 mm | 0.97 |

| Herbs | |
|---|---|
| • Parsley leaves broken 2-4mm | 2.85 |
| • Bay leaves powder | 0.35 |
| • Rosemary powder | 0.14 |

| Herbal roots | |
|---|---|
| • Root parsley powder | 1.67 |
| • Lovage root powder | 0.14 |

| Spices | |
|---|---|
| • Turmeric - ground (3% curcumine) | 0.69 |
| • Pepper white peeled - ground | 0.35 |
| • Celery seed - ground | 0.69 |
| • Nutmeg - ground | 0.14 |
| • Clove - ground | 0.07 |
| Flavouring | 8.34 |
| Beef powder ¹ | 2.01 |
| Beef fat | 4.00 |
| Juniper berries power | 0.14 |
| Burnt/caramelised sugar powder | 5.00 |
| Native potato starch (thickener) | 35.00 |
| Maltodextrin DE17-20 (filler) | 20.97 |
| Expanded starch particles | 0.49 |

| | |
|---|---|
| ¹ produced by cooking and mincing beef meat, followed by drying and milling | |

This bouillon powder was used to prepare a bouillon by adding two teaspoons of the powder to 250 mL of boiling water. The bouillon so obtained had a beefy roasty and umami taste.

### Example 6- Comparison

Powder mixtures were prepared on the basis of the recipes shown in Table 6.

**Table 6**

| | | | | |
|---|---|---|---|---|
| | **Wt.%** | | | |
| | **1** | **A** | **B** | **C** |

| *Allium* | | | | |
|---|---|---|---|---|
| • Onion white powder | 2.86 | 2.86 | 5.26 | 4.94 |
| • Onion white granules1-4mm | 2.86 | 2.86 | | |
| • Onion powder toasted | 4.29 | 4.29 | 13.15 | 9.21 |
| • Garlic powder | 0.86 | 0.86 | | |

| Vegetables | | | | |
|---|---|---|---|---|
| • Tomato powder (cold break) | 3.57 | 3.57 | 5.26 | 10.51 |
| • Carrot granules 1-4 mm | 8.57 | 8.57 | 5.26 | 10.51 |
| • Carrot juice powder | 3.14 | 3.14 | | |
| • Bell pepper red granules 1-3 mm | 0.86 | 0.86 | | |

| Herbs | | | | |
|---|---|---|---|---|
| • Parsley leaves broken 2-4mm | 2.86 | 2.86 | 5.26 | 2.14 |
| • Bay leaves powder | 0.29 | 0.29 | | |
| • Rosemary powder | 0.14 | 0.14 | | |
| • Celery powder | | | 5.26 | 2.14 |

| Herbal roots | | | | |
|---|---|---|---|---|
| • Celeriac powder | 4.29 | 4.29 | | |
| • Root parsley powder | 2.86 | 2.86 | | |
| • Lovage root powder | 0.20 | 0.20 | | |

| Spices | | | | |
|---|---|---|---|---|
| • Turmeric - ground (3% curcumin) | 0.71 | | | |
| • Pepper white peeled - ground | 0.29 | | | |
| • Celery seed - ground | 0.57 | | | |
| • Nutmeg - ground | 0.14 | | | |
| • Clove - ground | 0.09 | | | |
| Flavouring | 2.76 | 2.76 | 2.76 | 2.76 |
| Native potato starch (thickener) | 32.85 | 32.85 | 32.85 | 32.85 |
| Maltodextrin DE17-20 (filler) | 21.95 | 23.75 | 21.95 | 21.95 |
| Expanded starch particles | 1.29 | 1.29 | 1.29 | 1.29 |
| Maize oil | 1.7 | 1.7 | 1.7 | 1.7 |

The powders were mixed with hot water (14 grams per litre) to produce bouillons that were evaluated by an expert panel in a blind tasting session.

The results of the tasting session are summarised in Table 7.

**Table 7**

| 1 | **A** | **B** | **C** |
|---|---|---|---|
| Rounded, complex bouillon taste with good mouthfeel | Lacking complexity and bouillon-like taste of composition 1 | Strong taste of parsley and celery. Not rounded and complex | Empty, sweet taste profile. Parsley and celery taste, but less intense than B |

## Claims

1. A particulate bouillon composition comprising:
(a) 2-16 wt.% of *Allium* selected from onion, shallot, garlic, leek and combinations thereof;
(b) 1.5-25 wt.% of vegetables selected from carrot, tomato, red bell pepper, parsnip and combinations thereof;
(c) 1-10 wt.% of herbs selected from parsley, fenugreek, rosemary, bay leaves and combinations thereof;
(d) 0-15 wt.% of herbal roots selected from celeriac, lovage root, root parsley and combinations thereof;
(e) 0.4-4.2 wt.% of spices selected turmeric, pepper, nutmeg, clove, celery seed and combinations thereof;
(f) 15-50 wt.% of thickener;
(g) 12-55 wt.% of filler;
(h) 0.1-10wt.% of flavouring;
wherein the composition contains less than 0.5 wt.% sodium;
wherein components (a) to (e) constitute 10-50 wt.% of the composition;
wherein components (f) to (g) constitute 35-75 wt.% of the composition;
wherein components (a) to (h) constitute 70-100 wt.% of the composition.

2. Particulate bouillon composition according to claim 1, wherein the composition contains 1-10 wt.% oil.

3. Particulate bouillon composition according to any one of the preceding claims, wherein the thickener is selected from native starch, pregelatinised starch, pectin, agar, galactomannans, xanthan gum, cellulose gums (including carboxymethyl cellulose, hydroxypropyl cellulose, hydroxypropyl methylcellulose, microcrystalline cellulose, and methylcellulose), gum Arabic, gellan gum, alginates, alginic acid, arabinoxylans, curdlan gum, cassia gum, konjac gum, carrageenans, gelatins and combinations thereof.

4. Particulate bouillon composition according to claim 1 or 2, wherein, the thickener is selected from native starch, fenugreek gum, guar gum, locust bean gum, and tara gum, gum Arabic, gellan gum, curdlan gum, cassia gum, konjac gum and combinations thereof.

5. Particulate bouillon composition according to any one of the preceding claims, wherein the filler is selected from maltodextrin, dry glucose syrup and combinations thereof.

6. Particulate bouillon composition according to any one of the preceding claims, wherein the composition contains 1.5-8 wt.% of tomato.

7. Particulate bouillon composition according to any one of the preceding claims, wherein the composition contains at least three herbs selected from parsley, fenugreek, rosemary and bay leaves.

8. Particulate bouillon composition according to any one of the preceding claims, wherein the composition contains 0.2-1.5 wt.% of celery seed.

9. Particulate bouillon composition according to any one of the preceding claims, wherein the composition contains 0.1-1.0 wt.% of lovage root.

10. Particulate composition according to any one of the preceding claims, wherein the bouillon composition is a vegetable bouillon, comprising:
(a) 4-15 wt.% of onion;
(b) 5-20 wt.% of vegetables selected from carrot, tomato and combinations thereof;
(d) 3-15 wt.% of herbal roots selected from celeriac, lovage root, root parsley and combinations thereof;
(i) 1-10 wt.% of vegetable oil;
wherein the combination of these components (a), (b) and (d) constitutes 15-40 wt.% of the composition.

11. Particulate bouillon composition according to any one of claims 1-9, wherein the bouillon composition is a chicken bouillon, comprising:
(h) 0.3-10 wt.% of chicken flavouring;
(i) 1-10 wt.% of chicken fat;
(j) 2-10 wt.% of chicken powder.

12. Particulate bouillon composition according to any one of claims 1-9, wherein the bouillon composition is a beef bouillon, comprising:
(h) 0.3-10 wt.% of beef flavouring;
(i) 1-10 wt.% of beef fat;
(j) 1-8 wt.% of beef powder.

13. Particulate bouillon composition according to any one of the preceding claims, wherein the composition contains 0-0.5 wt.% glutamate..

14. A process of preparing a particulate bouillon composition, said process comprising combining the following components in the indicated amounts:
(a) 2-16 parts by weight of *Allium* selected from onion, shallot, garlic, leek and
combinations thereof;
(b) 1.5-25 parts by weight of vegetables selected from carrot, tomato, red bell pepper, parsnip and combinations thereof;
(c) 1-10 parts by weight of herbs selected from parsley, fenugreek, rosemary, bay leaves and combinations thereof;
(d) 0-15 parts by weight of herbal roots selected from celeriac, lovage root, root parsley and combinations thereof;
(e) 0.4-4.2 parts by weight of spices selected turmeric, pepper, nutmeg, clove, celery seed and combinations thereof;
(f) 15-50 parts by weight of thickener;
(g) 12-55 parts by weight of filler;
(h) 0.1-10 parts by weight of flavouring;
wherein the process does not comprise the addition of sodium chloride or glutamate;
wherein components (a) to (e) constitute 15-50 wt.% of the final composition;
wherein components (f) to (g) constitute 35-75 wt.% of the final composition;
wherein components (a) to (h) constitute 70-100 wt.% of the final composition.

15. Use of particulate bouillon composition in the preparation of food, said use comprising mixing a particulate bouillon composition according to any one of claims 1-13 with water.

## Patentansprüche

1. Teilchenförmige Bouillonzusammensetzung, umfassend:
(a) 2-16 Gew.-% Allium, ausgewählt unter Zwiebeln, Schalotten, Knoblauch, Porree und Kombinationen davon;
(b) 1,5-25 Gew.-% Gemüse, ausgewählt unter Karotten, Tomaten, rotem Paprika, Pastinaken und Kombinationen davon;
(c) 1-10 Gew.-% Kräuter, ausgewählt unter Petersilie, Bockshornklee, Rosmarin, Lorbeerblättern und Kombinationen davon;
(d) 0-15 Gew.-% Kräuterwurzeln, ausgewählt unter Sellerie, Liebstöckelwurzeln, Wurzelpetersilie und Kombinationen davon;
(e) 0,4-4,2 Gew.-% Gewürzen, ausgewählt unter Kurkuma, Pfeffer, Muskatnuss, Gewürznelke, Selleriesamen und Kombinationen davon;
(f) 15-50 Gew.-% Verdickungsmittel;
(g) 12-55 Gew.-% Füllstoff;
(h) 0,1-10 Gew.-% Geschmacksstoffe;
wobei die Zusammensetzung weniger als 0,5 Gew.-% Natrium enthält;
wobei die Komponenten (a) bis (e) 10-50 Gew.-% der Zusammensetzung ausmachen;
wobei die Komponenten (f) bis (g) 35-75 Gew.-% der Zusammensetzung ausmachen;
wobei die Komponenten (a) bis (h) 70-100 Gew.-% der Zusammensetzung ausmachen.

2. Teilchenförmige Bouillonzusammensetzung nach Anspruch 1, wobei die Zusammensetzung 1-10 Gew.-% Öl enthält.

3. Teilchenförmige Bouillonzusammensetzung nach einem der vorhergehenden Ansprüche, wobei das Verdickungsmittel ausgewählt ist unter nativer Stärke, vorgelatinierter Stärke, Pektin, Agar, Galaktomannanen, Xanthangummi, Cellulosegummis (einschließlich Carboxymethylcellulose, Hydroxypropylcellulose, Hydroxypropylmethylcellulose, mikrokristalline Cellulose und Methylcellulose), Gummi Arabicum, Gellangummi, Alginaten, Alginsäure, Arabinoxylanen, Curdlangummi, Cassiagummi, Konjakgummi, Carrageenanen, Gelatinen und Kombinationen davon.

4. Teilchenförmige Bouillonzusammensetzung nach Anspruch 1 oder 2, wobei das Verdickungsmittel ausgewählt ist unter nativer Stärke, Bockshornkleegummi, Guargummi, Johannisbrotkernmehl und Taragummi, Gummi Arabicum, Gellangummi, Curdlangummi, Cassiagummi, Konjakgummi und Kombinationen davon.

5. Teilchenförmige Bouillonzusammensetzung nach einem der vorhergehenden Ansprüche, wobei der Füllstoff ausgewählt ist unter Maltodextrin, trockenem Glukosesirup und Kombinationen davon.

6. Teilchenförmige Bouillonzusammensetzung nach einem der vorhergehenden Ansprüche, wobei die Zusammensetzung 1,5-8 Gew.-% Tomaten enthält.

7. Teilchenförmige Bouillonzusammensetzung nach einem der vorhergehenden Ansprüche, wobei die Zusammensetzung mindestens drei Kräuter enthält, ausgewählt unter Petersilie, Bockshornklee, Rosmarin und Lorbeerblättern.

8. Teilchenförmige Bouillonzusammensetzung nach einem der vorhergehenden Ansprüche, wobei die Zusammensetzung 0,2-1,5 Gew.-% Selleriesamen enthält.

9. Teilchenförmige Bouillonzusammensetzung nach einem der vorhergehenden Ansprüche, wobei die Zusammensetzung 0,1-10 Gew.-% Liebstöckelwurzeln enthält.

10. Teilchenförmige Bouillonzusammensetzung nach einem der vorhergehenden Ansprüche, wobei die Bouillonzusammensetzung eine Gemüsebouillon ist, umfassend:
(a) 4-15 Gew.-% Zwiebeln;
(b) 5-20 Gew.-% Gemüse, ausgewählt unter Karotten, Tomaten und Kombinationen davon;
(d) 3-15 Gew.-% Kräuterwurzeln, ausgewählt unter Sellerie, Liebstöckelwurzeln, Wurzelpetersilie und Kombinationen davon;
(i) 1-10 Gew.-% Pflanzenöl;
wobei die Kombination dieser Komponenten (a), (b) und (d) 15-40 Gew.-% der Zusammensetzung ausmacht.

11. Teilchenförmige Bouillonzusammensetzung nach einem der Ansprüche 1-9, wobei die Bouillonzusammensetzung eine Hühnerbrühe ist, umfassend:
(h) 0,3-10 Gew.-% Hühneraroma;
(i) 1-10 Gew.-% Hühnerfett;
(j) 2-10 Gew.-% Hühnerfleischpulver.

12. Teilchenförmige Bouillonzusammensetzung nach einem der Ansprüche 1-9, wobei die Bouillonzusammensetzung eine Rinderbouillon ist, umfassend:
(h) 0,3-10 Gew.-% Rindfleischaroma;
(i) 1-10 Gew.-% Rinderfett;
(j) 1-8 Gew.-% Rindfleischpulver.

13. Teilchenförmige Bouillonzusammensetzung nach einem der vorhergehenden Ansprüche, wobei die Zusammensetzung 0-0,5 Gew.-% Glutamat enthält.

14. Verfahren zur Herstellung einer teilchenförmigen Bouillonzusammensetzung, wobei das Verfahren das Kombinieren der folgenden Komponenten in den angegebenen Mengen umfasst:
(a) 2-16 Gewichtsteile Allium, ausgewählt unter Zwiebeln, Schalotten, Knoblauch, Porree und Kombinationen davon;
(b) 1,5-25 Gewichtsteile Gemüse, ausgewählt unter Karotten, Tomaten, rotem Paprika, Pastinaken und Kombinationen davon;
(c) 1-10 Gewichtsteile Kräuter, ausgewählt unter Petersilie, Bockhornklee, Rosmarin, Lorbeerblättern und Kombinationen davon;
(d) 0-15 Gewichtsteile Kräuterwurzeln, ausgewählt unter Sellerie, Liebstöckelwurzeln, Wurzelpetersilie und Kombinationen davon;
(e) 0,4-4,2 Gewichtsteile Gewürze, ausgewählt unter Kurkuma, Pfeffer, Muskatnuss, Gewürznelke, Selleriesamen und Kombinationen davon;
(f) 15-50 Gewichtsteile Verdickungsmittel;
(g) 12-55 Gewichtsteile Füllstoff;
(h) 0,1-10 Gewichtsteile Geschmacksstoffe;
wobei das Verfahren die Zugabe von Natriumchlorid oder Glutamat nicht einbezieht;
wobei die Komponenten (a) bis (e) 15-50 Gew.-% der Endzusammensetzung ausmachen;
wobei die Komponenten (f) bis (g) 35-75 Gew.-% der Endzusammensetzung ausmachen;
wobei die Komponenten (a) bis (h) 70-100 Gew.-% der Endzusammensetzung ausmachen.

15. Verwendung einer teilchenförmigen Bouillonzusammensetzung zur Zubereitung von Nahrungsmitteln, wobei die Verwendung das Mischen einer teilchenförmigen Bouillonzusammensetzung nach einem der Ansprüche 1-13 mit Wasser umfasst.

## Revendications

1. Composition de bouillon particulaire comprenant :
(a) 2 à 16 % en poids d'*Allium* choisi parmi l'oignon, l'échalote, l'ail, le poireau et des combinaisons de ceux-ci ;
(b) 1,5 à 25 % en poids de légumes choisis parmi la carotte, la tomate, le poivron rouge, le panais et des combinaisons de ceux-ci ;
(c) 1 à 10 % en poids d'herbes aromatiques choisies parmi le persil, le fenugrec, le romarin, les feuilles de laurier et des combinaisons de ceux-ci ;
(d) 0 à 15 % en poids de racines aromatiques choisies parmi le céleri rave, la racine de livèche, le persil racine et des combinaisons de ceux-ci ;
(e) 0,4 à 4,2 % en poids d'épices choisies parmi le curcuma, le poivre, la noix de muscade, le clou de girofle, la graine de céleri et des combinaisons de ceux-ci ;
(f) 15 à 50 % en poids d'épaississant ;
(g) 12 à 55 % en poids de charge ;
(h) 0,1 à 10 % en poids d'aromatisant ;
dans laquelle la composition contient moins de 0,5 % en poids de sodium ;
dans laquelle les composants (a) à (e) constituent 10 à 50 % en poids de la composition ;
dans laquelle les composants (f) à (g) constituent 35 à 75 % en poids de la composition ;
dans laquelle les composants (a) à (h) constituent de 70 à 100 % en poids de la composition.

2. Composition de bouillon particulaire selon la revendication 1, dans laquelle la composition contient 1 à 10 % en poids d'huile.

3. Composition de bouillon particulaire selon l'une quelconque des revendications précédentes, dans laquelle l'épaississant est choisi parmi l'amidon natif, l'amidon prégélatinisé, la pectine, la gélose, les galactomannanes, la gomme xanthane, les gommes cellulosiques (y compris la carboxyméthylcellulose, l'hydroxypropylcellulose, l'hydroxypropylméthylcellulose, la cellulose microcristalline et la méthylcellulose), la gomme arabique, la gomme gellane, les alginates, l'acide alginique, les arabinoxylanes, la gomme curdlane, la gomme de casse, la gomme de konjac, les carraghénanes, les gélatines et des combinaisons de ceux-ci.

4. Composition de bouillon particulaire selon la revendication 1 ou 2, dans laquelle l'épaississant est choisi parmi l'amidon natif, la gomme de fenugrec, la gomme de guar+, la gomme de caroube, et la gomme tara, la gomme arabique, la gomme gellane, la gomme curdlane, la gomme de casse, la gomme de konjac et des combinaisons de ceux-ci.

5. Composition de bouillon particulaire selon l'une quelconque des revendications précédentes, dans laquelle la charge est choisie parmi la maltodextrine, le sirop de glucose anhydre et des combinaisons de ceux-ci.

6. Composition de bouillon particulaire selon l'une quelconque des revendications précédentes, dans laquelle la composition contient 1,5 à 8 % en poids de tomate.

7. Composition de bouillon particulaire selon l'une quelconque des revendications précédentes, dans laquelle la composition contient au moins trois herbes aromatiques choisies parmi le persil, le fenugrec, le romarin et les feuilles de laurier.

8. Composition de bouillon particulaire selon l'une quelconque des revendications précédentes, dans laquelle la composition contient 0,2 à 1,5 % en poids de graines de céleri.

9. Composition de bouillon particulaire selon l'une quelconque des revendications précédentes, dans laquelle la composition contient 0,1 à 1,0 % en poids de racine de livèche.

10. Composition de bouillon particulaire selon l'une quelconque des revendications précédentes, dans laquelle la composition de bouillon est un bouillon de légumes comprenant :
(a) 4 à 15 % en poids d'oignon ;
(b) 5 à 20 % en poids de légumes choisis parmi la carotte, la tomate et des combinaisons de celles-ci ;
(d) 3 à 15 % en poids de racines aromatiques choisies parmi le céleri rave, la racine de livèche, le persil racine et des combinaisons de ceux-ci ;
(i) 1 à 10 % en poids d'huile végétale ;
dans laquelle la combinaison des composants (a), (b) et (d) constitue 15 à 40 % en poids de la composition.

11. Composition de bouillon particulaire selon l'une quelconque des revendications 1 à 9, dans laquelle la composition de bouillon est un bouillon de poulet comprenant :
(h) 0,3 à 10 % en poids d'arôme de poulet ;
(i) 1 à 10 % en poids de gras de poulet ;
(j) 2 à 10 % en poids de poudre de poulet.

12. Composition de bouillon particulaire selon l'une quelconque des revendications 1 à 9, dans laquelle la composition de bouillon est un bouillon de boeuf comprenant :
(h) 0,3 à 10 % en poids d'arôme de boeuf ;
(i) 1 à 10 % en poids de gras de boeuf ;
(j) 1 à 8 % en poids de poudre de boeuf.

13. Composition de bouillon particulaire selon l'une quelconque des revendications précédentes, dans laquelle la composition contient 0 à 0,5 % en poids de glutamate.

14. Procédé de préparation d'une composition de bouillon particulaire, ledit procédé comprenant la combinaison des composants suivants en les quantités indiquées :
(a) 2 à 16 parties en poids d'*Allium* choisi parmi l'oignon, l'échalote, l'ail, le poireau et des combinaisons de ceux-ci ;
(b) 1,5 à 25 parties en poids de légumes choisis parmi la carotte, la tomate, le poivron rouge, le panais et des combinaisons de ceux-ci ;
(c) 1 à 10 parties en poids d'herbes aromatiques choisies parmi le persil, le fenugrec, le romarin, les feuilles de laurier et des combinaisons de ceux-ci ;
(d) 0 à 15 parties en poids de racines aromatiques choisies parmi le céleri rave, la racine de livèche, le persil racine et des combinaisons de ceux-ci ;
(e) 0,4 à 4,2 parties en poids d'épices choisies parmi le curcuma, le poivre, la noix de muscade, le clou de girofle, la graine de céleri et des combinaisons de ceux-ci ;
(f) 15 à 50 parties en poids d'épaississant ;
(g) 12 à 55 parties en poids de charge ;
(h) 0,1 à 10 parties en poids d'aromatisant ;
dans lequel le procédé ne comprend pas l'addition de chlorure de sodium ou de glutamate ;
dans lequel les composants (a) à (e) constituent 15 à 50 % en poids de la composition finale ;
dans lequel les composants (f) à (g) constituent 35 à 75 % en poids de la composition finale ;
dans lequel les composants (a) à (h) constituent 70 à 100 % en poids de la composition finale.

15. Utilisation d'une composition de bouillon particulaire dans la préparation d'un aliment, ladite utilisation comprenant le mélange d'une composition de bouillon particulaire selon l'une quelconque des revendications 1 à 13 avec de l'eau.
